Europäisches Patentamt

European Patent Office

Office européen des brevets

(19)

(11) Numéro de publication : **0 088 197**
**B1**

(12)                                  **FASCICULE DE BREVET EUROPÉEN**

(45) Date de publication du fascicule du brevet :
**12.11.86**

(21) Numéro de dépôt : **82400432.9**

(22) Date de dépôt : **10.03.82**

(51) Int. Cl.⁴ : **B 23 C   3/00, E 01 B 31/13**

---

(54) **Dispositif pour le reprofilage des rails par fraisage en continu.**

---

(43) Date de publication de la demande :
**14.09.83 Bulletin 83/37**

(45) Mention de la délivrance du brevet :
**12.11.86 Bulletin 86/46**

(84) Etats contractants désignés :
**AT BE CH DE FR GB IT LI LU NL SE**

(56) Documents cités :
**DE-A- 2 118 209
DE-B- 1 014 874
FR-A- 1 197 642
FR-A- 1 236 303
FR-A- 2 333 897
FR-A- 2 487 395
GB-A-   817 826
GB-A- 1 031 763
GB-A- 2 014 067
US-A- 1 587 962
US-A- 2 077 895**

(73) Titulaire : **MATIX INDUSTRIES (Société Anonyme)
59, rue Saint-Lazare
F-75009 Paris (FR)**

(72) Inventeur : **Line, Henri B.
Chemin de Rumigny Saint-Fuscien
F-80680 Sains-en-Amienois (FR)**

(74) Mandataire : **Leger, Jean-François et al
Micheli & Cie 118, rue du Rhône Case postale 47
CH-1211 Genève 6 (CH)**

Jouve, 18, rue St-Denis, 75001 Paris, France

## Description

La présente invention a pour objet un dispositif pour le reprofilage des rails par fraisage en continu, comme décrit dans le préambule de la revendication 1.

Une machine à reprofiler les rails par fraisage en continu (FR-A 1 236 303) comporte plusieurs unités de fraisage, généralement à axe horizontal ou incliné, dont chacune usine une partie du profil. Cette conception coûte cher au moment de l'investissement mais aussi en entretien et en outils.

Par ailleurs, le guidage qui sert de référence à la profondeur de passe est réalisé par un ou plusieurs galets en contact avec la face supérieure du champignon du rail. Cette conception présente un très grave défaut car les rails à profiler comportent des ondulations d'un pas variable de 3 à 30 centimètres, ondulations qui sont reproduites au niveau de la fraise et engendrent un usinage de mauvaise qualité.

Enfin, le guidage latéral est souvent réalisé sur l'âme du rail et ne tient pas compte des tolérances d'épaisseur (1,5 mm maximum) des éléments soudés.

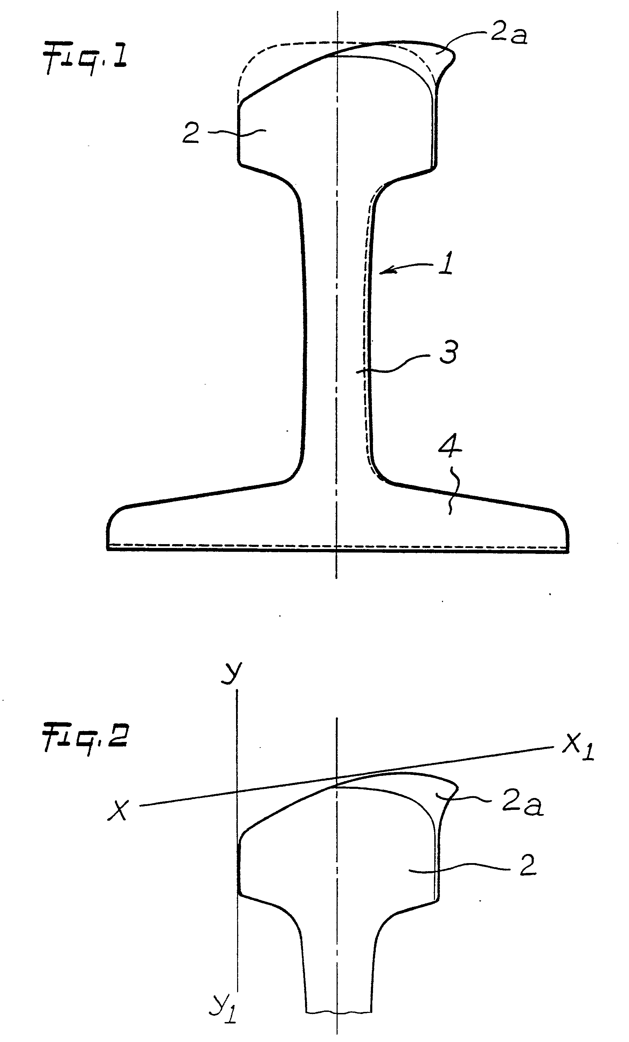

A la figure 1, on a représenté un rail 1 dont le profil du chemin de roulement 2 ou champignon est représenté à l'état neuf en trait interrompu et dont le profil à l'état usé est représenté en trait plein et comporte un bourrelet 2a dû au refoulement qui, dans le cas représenté, correspond à un rail usé à gauche. Ainsi qu'il a été indiqué, on ne peut se guider sur l'âme 3 et sur la semelle 4 du rail en raison des tolérances des éléments soudés.

Pour remédier aux inconvénients mentionnés ci-dessus, le fraisage est effectué avec une seule unité à broche verticale ou légèrement inclinée usinant la totalité du profil en une seule phase. Le guidage est réalisé en prenant pour référence la face supérieure du champignon 2 suivant un plan tangent $XX_1$ (figure 2) au rail et en prenant pour référence une face latérale 2b du champignon 2 suivant un plan $YY_1$ (figure 2).

Conformément à la présente invention, le dispositif est caractérisé par le fait que les moyens de guidage de profondeur de passe de l'outil sont constitués d'un plateau circulaire monté en rotation libre sur un axe vertical ou légèrement incliné solidaire de l'organe de support ; que les moyens de guidage de prise de passe latérale de l'outil sont constitués d'un galet conique monté en rotation libre sur le même axe que ledit plateau ; et par le fait que l'outil est constitué par une fraise de forme travaillant simultanément sur la surface supérieure du rail et sur une face latérale de celui-ci.

L'utilisation pour le guidage horizontal du plan tangent $XX_1$ (figure 2) permet d'intégrer les ondulations dues à l'usure du rail et le guidage vertical suivant le plan $YY_1$ (figure 2) n'est influencé ni par les différences d'épaisseur et de largeur des éléments de rails soudés ni par les inscriptions en relief sur l'âme du rail.

Le fraisage de l'ensemble du profil du rail est réalisé en une seule fois avec une seule fraise travaillant dans les meilleures conditions de coupe, cette dernière étant continue grâce au grand nombre de dents en prise et réalisant un usinage du même type que le surfaçage. La conception du dispositif de fraisage permet le passage, sans aucune perte de temps, de l'usinage d'un rail usé à droite à l'usinage d'un rail usé à gauche. Enfin, suivant un mode de réalisation particulier, le dispositif de fraisage est monté sur un organe tracteur qui permet l'usinage du rail lorsque celui-ci est fixé sur la voie.

D'autres caractéristiques et avantages de l'invention seront mieux compris à la lecture de la description qui va suivre de plusieurs modes de réalisation et en se référant aux dessins annexés sur lesquels :

la figure 1 est une vue en coupe d'un rail après usure ;

la figure 2 est une vue en coupe partielle d'un rail usé et des plans de guidage ;

la figure 3 est une vue en élévation du dispositif de guidage du rail avant fraisage suivant l'invention ;

la figure 4 est une vue en plan du dispositif représenté à la figure 3 ;

la figure 5 est une vue en élévation du moyen de guidage du rail dans le plan de fraisage ;

la figure 6 est une vue en élévation du moyen de guidage du rail après fraisage ;

la figure 7 est une vue en élévation latérale d'une installation de guidage et de fraisage du rail ;

la figure 8 est une vue en plan de l'installation représentée à la figure 7 ;

la figure 9 est une vue en élévation de face d'une unité de fraisage pendant une opération d'usinage à droite ;

la figure 10 est une vue en élévation de face d'une unité de fraisage pendant une opération d'usinage à gauche ;

la figure 11 est une vue en élévation d'une unité de fraisage pour le reprofilage de rails à droite et à gauche ;

la figure 12 est une vue en plan de l'unité de fraisage représentée à la figure 11 ;

la figure 13 est une vue en élévation d'une tête pour le guidage et l'usinage sur un rail fixé sur une voie ;

la figure 14 est une vue en élévation d'un ensemble de reprofilage de rails fixés sur une voie ;

la figure 15 est une vue à plus grande échelle du dispositif de guidage et de reprofilage d'un rail fixé sur une voie ;

la figure 16 est une vue en plan du corps de la tête coulissante portant la fraise et les moyens de guidage.

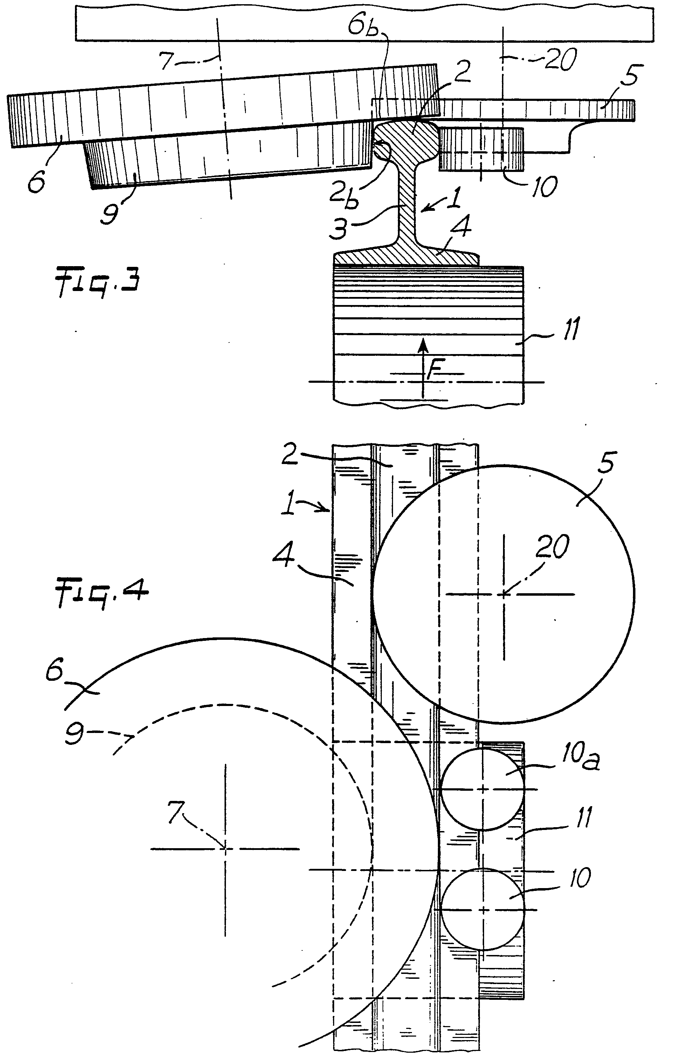

Le dispositif suivant l'invention représenté aux figures 3 et 4 est utilisé pour le reprofilage d'un rail 1 qui se déplace par rapport audit dispositif de reprofilage et qui présente après usure un bourrelet 2a comme représenté à la figure 2.

Dans ce but, le dispositif de reprofilage suivant l'invention comprend une fraise de forme 5 qui assure l'usinage du chemin de roulement 2 du rail et des moyens de guidage de la fraise disposés avant la fraise 5 qui sont constitués par un plateau 6 monté en rotation libre sur un axe 7 solidaire d'un organe de support 8, ledit plateau 6 étant en contact par l'une de ses faces 6b contre la face supérieure du chemin de roulement du rail suivant un plan XX₁ (figure 2) tangent au rail. Le plateau 6 dont l'axe 7 est vertical ou légèrement incliné assure le guidage de référence de profondeur de l'outil de fraisage 5.

Par ailleurs, un autre moyen de guidage de référence de prise latérale de l'outil de fraise 5 est constitué d'un galet conique 9 lié au plateau 6 et monté en rotation libre sur le même axe 7 que ledit plateau. Le galet conique 9 est en contact avec la face latérale 2b du chemin de roulement 2 du rail et il coopère avec deux galets mobiles d'appui 10, 10a dont les axes sont situés de part et d'autre du plan passant par l'axe 7 du plateau 6.

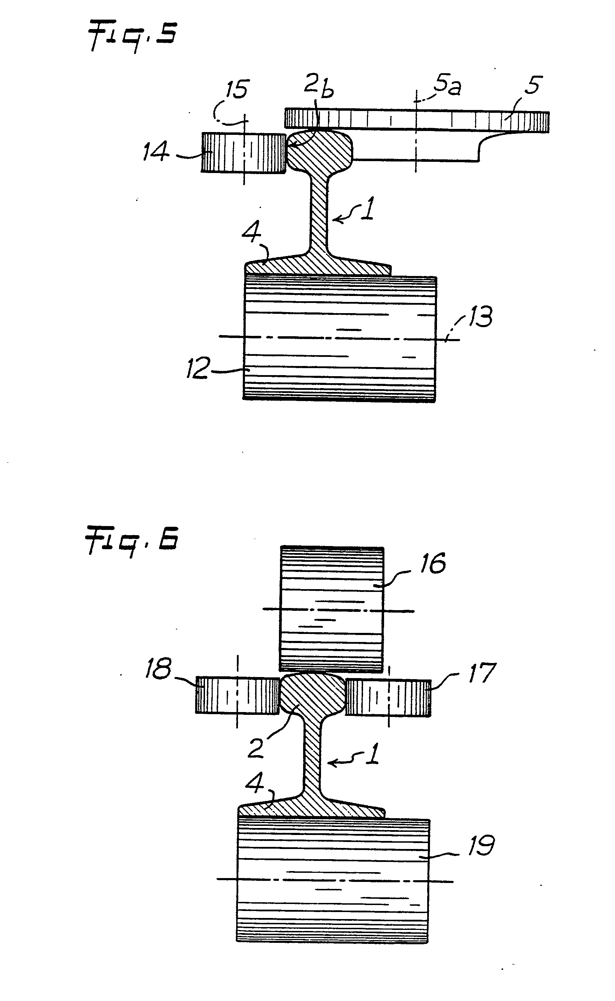

Le rail 1 est appuyé sur le plateau 6 par sa semelle 4 en contact avec un galet 11 d'appui et d'entraînement linéaire du rail 1 qui se déplace en regard du dispositif de profilage, ledit galet 11 étant entraîné en rotation par un organe moteur non représenté au dessin et poussé vers le haut avec un effort F par un organe non représenté au dessin. Dans le plan de fraisage représenté à la figure 5, le rail 1 repose par sa semelle 4 sur un galet d'appui 12 dont l'axe 13 est mobile. Cet axe est bloqué en position automatiquement à l'entrée et à la sortie d'un rail, c'est-à-dire lorsque l'un des guidages avant ou arrière n'est plus en contact du rail. Un galet d'appui latéral 14 dont l'axe 15 est fixe est en contact avec la face latérale 2b du chemin de roulement du rail ; du côté opposé à la fraise 5.

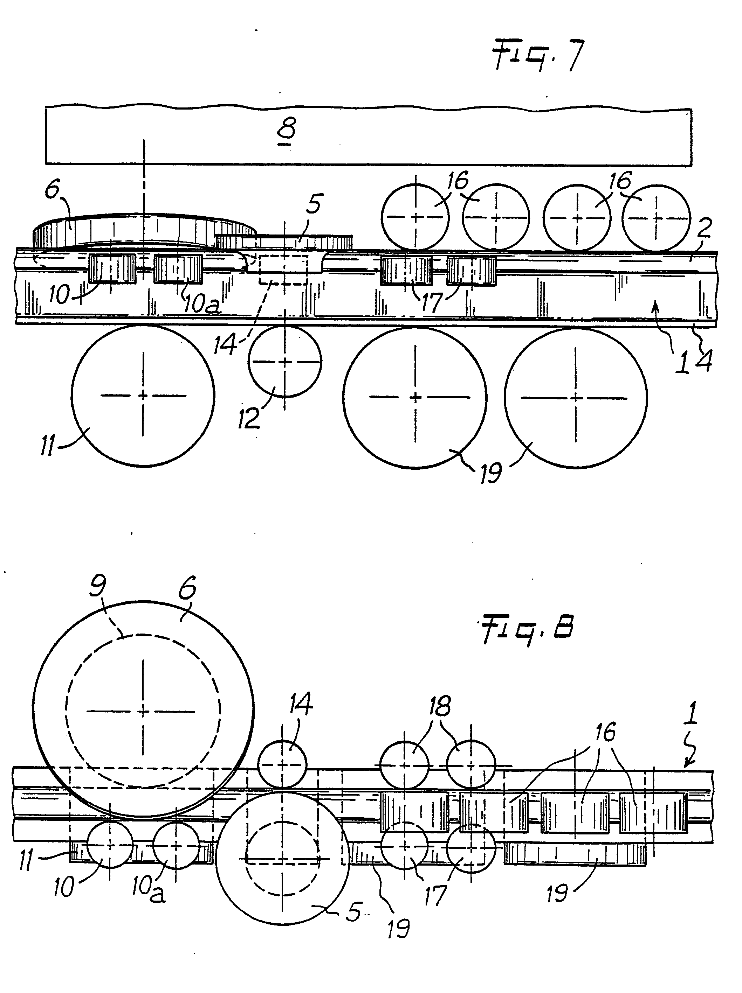

Comme représenté aux figures 6, 7 et 8 et en arrière de la fraise 5, sont montés sur l'organe de support 8 et disposés sur la face supérieure du rail des galets d'appui de référence 16 dont les axes sont réglables en position et qui sont bloqués pendant le fraisage. Par ailleurs, des galets 17, 18 sont disposés de part et d'autres des faces latérales du chemin de roulement 2.

Enfin, la semelle 4 du rail repose sur des galets d'appui 19 qui sont entraînés en rotation par un organe moteur et poussés vers le haut pour assurer le déplacement linéaire du rail 1 en combinaison avec le galet 11.

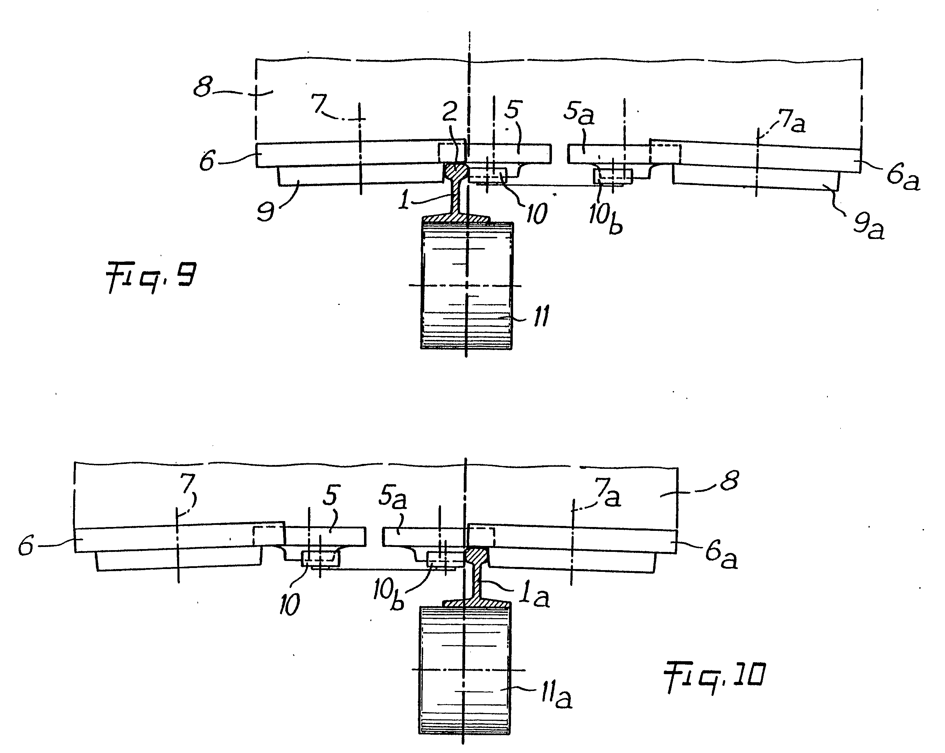

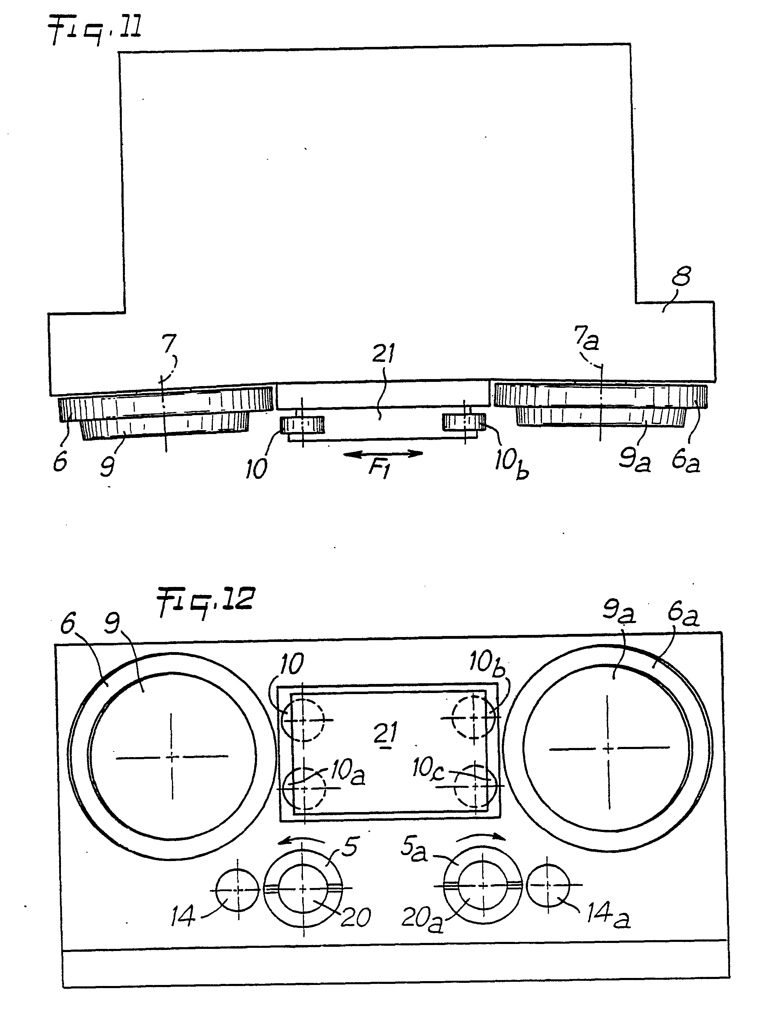

Pour passer très vite de l'usinage d'un rail usé à gauche à celui d'un rail usé à droite, le dispositif de reprofilage est constitué comme représenté aux figures 9, 10, 11, 12 de deux unités de guidage et de fraisage disposées symétriquement par rapport à un axe longitudinal.

Les deux unités fixées sur un même organe de support comportent deux broches 20, 20a portant les fraises 5, 5a dont les axes sont parallèles et qui tournent en sens inverse, deux plateaux 6, 6a pour le guidage de référence de profondeur de passe et deux galets coniques 9, 9a pour la référence latérale.

Les galets d'appui latéraux 10, 10a, 10b, 10c sont montés sur un chariot 21 se déplaçant latéralement suivant la double flèche F1 pour venir en contact sélectivement avec l'une des faces latérales du chemin de roulement du rail.

Lorsqu'on veut reprofiler un rail 1 usé à gauche, celui-ci est monté ainsi qu'il est indiqué à la figure 9, de telle sorte que la fraise 5 vienne en contact avec la partie déformée à droite du chemin de roulement 2, que le plateau 6 vienne en contact avec la partie supérieure du chemin de roulement 2 et que le galet conique 9 vienne en contact avec la face latérale 2b opposée à la face latérale usinée par la fraise. Dans ce cas, le chariot 21 est déplacé afin que les galets 10, 10a viennent en contact avec la face latérale du chemin de roulement 2 opposée au galet conique 9, le rail 1 reposant et étant entraîné par le galet 11 d'entraînement.

Pour reprofiler un rail 1a usé à droite, celui-ci est monté ainsi qu'il est indiqué à la figure 10, de telle sorte que l'usinage soit effectué par la fraise 5a et le guidage supérieur et latéral par le plateau 6a et le galet conique 9a.

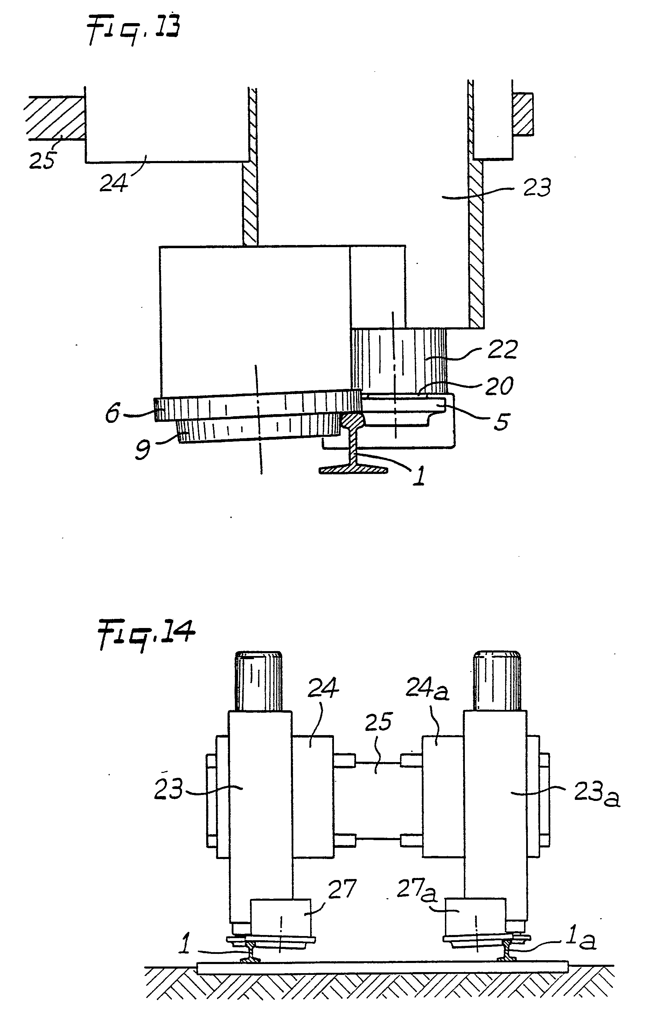

Aux figures 13, 14, 15 et 16, on a représenté un autre mode de réalisation du dispositif dans lequel le reprofilage est effectué sur un ou deux rails 1 fixés sur la voie et dans ce cas le dispositif de guidage et d'usinage est mobile par rapport au rail qui est fixe.

Le dispositif représenté aux figures 13, 15 et 16 comprend une fraise 5 dont la broche 20 est montée rotative dans un fourreau 22 monté coulissant verticalement dans une tête d'usinage 23 qui porte également en avant de la fraise 5 un moyen de guidage constitué du plateau 6 et du galet conique 9 ainsi qu'il a été décrit ci-dessus. La tête d'usinage 23 est montée coulissante verticalement sur une cuirasse 24 elle-même montée coulissante horizontalement sur une traverse 25 solidaire d'un organe tracteur non représenté au dessin et assurant le déplacement relatif du dispositif par rapport au rail 1 qui est fixe.

Pour assurer l'évacuation des copeaux, un carter d'aspiration 26 disposé autour de la fraise 5 est monté sur le fourreau 22.

A la figure 14, on a représenté un autre mode de réalisation du dispositif destiné à réaliser en même temps le reprofilage de deux rails 1, la montée sur une voie. Le dispositif comprend deux unités de guidage et d'usinage 27, 27a qui sont solidaires de deux têtes d'usinage 23, 23a montées coulissantes verticalement sur des cuirasses 24, 24a se déplaçant horizontalement sur une traverse 25 solidaire d'un organe tracteur non représenté et assurant le déplacement linéaire de l'ensemble par rapport aux rails fixes 1, 1a.

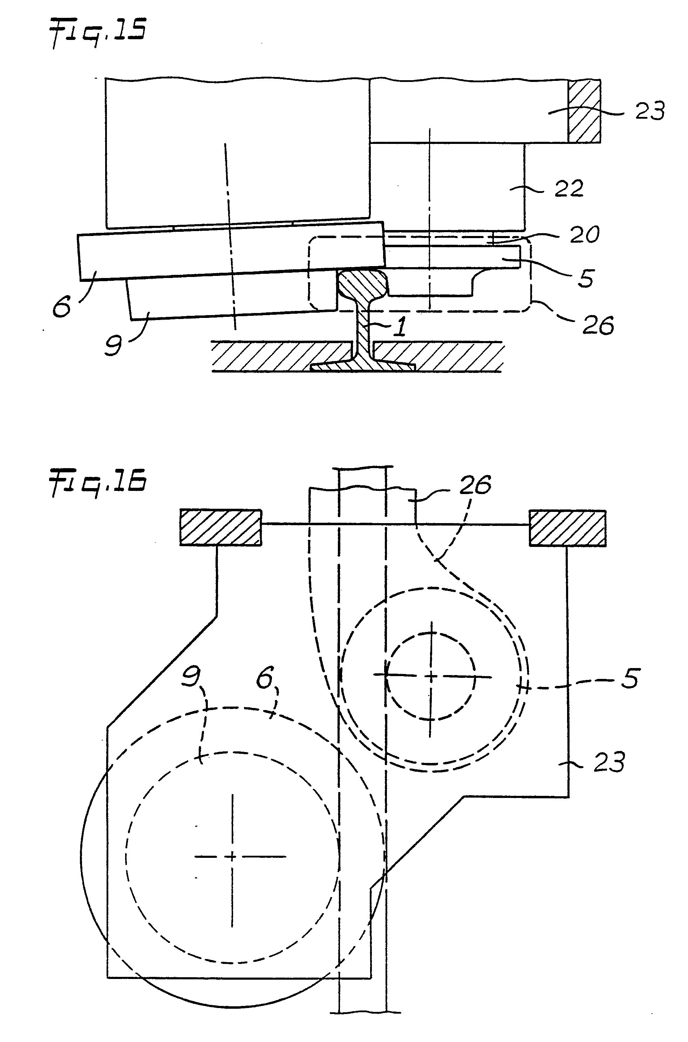

Les unités de guidage et de fraisage 27, 27a sont constituées de la même manière que celles représentées aux figures 13 et 15.

## Revendications

1. Dispositif pour le reprofilage des rails par fraisage en continu, comprenant un organe de support (8) ayant un déplacement linéaire relatif par rapport à un rail (1) fixe ou mobile, ledit organe de support (8) comportant à l'avant de l'outil de fraisage (5) par rapport au sens de déplacement, des moyens de guidage (6) de référence de profondeur de passe de l'outil prenant appui sur la face supérieure du chemin de roulement (2) du rail et de guidage (9) de référence de prise de passe latérale de l'outil prenant appui sur la face latérale (2b) du chemin de roulement du rail (2) caractérisé en ce que les moyens de guidage de profondeur de passe de l'outil sont constitués d'un plateau circulaire (6) monté en rotation libre sur un axe (7) vertical ou légèrement incliné solidaire de l'organe de support (8) ; que les moyens de guidage de prise de passe latérale de l'outil sont constitués d'un galet conique (9) monté en rotation libre sur le même axe (7) que ledit plateau (6) ; et par le fait que l'outil est constitué par une fraise de forme (5) travaillant simultanément sur la surface supérieure du rail et sur une face latérale de celui-ci.

2. Dispositif suivant la revendication 1, caractérisé en ce que, en regard du galet conique (9) et sur l'autre face latérale du chemin de roulement (2) sont disposés des galets mobiles d'appui (10, 10a) montés en rotation libre sur des axes verticaux solidaires de l'organe de support (8).

3. Dispositif suivant l'une des revendications 1 ou 2 caractérisé en ce que, dans le plan de fraisage, sont disposés un galet d'appui latéral fixe (14) et un galet d'appui inférieur mobile (12).

4. Dispositif suivant l'une quelconque des revendications 1 à 3, caractérisé en ce que, en arrière du plan de fraisage, sont disposés des galets d'appui supérieur (16), inférieur (19) et latéraux (17, 18).

5. Dispositif suivant l'une quelconque des revendications 1 à 4, caractérisé en ce que, sur l'organe de support (8), sont montées deux broches (20, 20a) de fraisage tournant en sens inverse portant des fraises associées à des galets d'appui pour usiner sélectivement un rail (1, 1a) usé à droite et à gauche et, en avant des deux broches (20, 20a) d'usinage, sont montés deux plateaux (6, 6a) de référence de profondeur de passe et deux galets coniques (9, 9a) de référence de prise de passe latérale associés à des galets mobiles d'appui (10, 10a, 10b, 10c).

6. Dispositif suivant la revendication 1, caractérisé en ce que les moyens de guidage de référence de profondeur (6) et de prise de passe latérale (9) de l'outil et les moyens de fraisage (5) sont montés sur une tête d'usinage (23), ladite tête d'usinage coulissant verticalement sur une cuirasse (24) montée coulissante horizontalement sur une traverse (25) fixe disposée sur un organe tracteur se déplaçant par rapport au rail (1) solidaire de la voie.

7. Dispositif suivant la revendication 5, caractérisé en ce que la broche de fraisage (20) est solidaire d'un fourreau (22) monté coulissant verticalement sur la tête d'usinage (23), ledit fourreau supportant un carter d'aspiration (26) des copeaux.

8. Dispositif suivant la revendication 5, caractérisé en ce que deux têtes d'usinage (23, 23a) portant chacune une broche de fraisage (20) et des moyens de guidage supérieur (6) et latéral (9) sont montés coulissantes verticalement sur deux cuirasses (24, 24a) se déplaçant horizontalement sur une traverse fixe (25) solidaire d'un organe tracteur se déplaçant par rapport aux rails (1, 1a) solidaires de la voie.

## Claims

1. Device for the reprofiling of rails by contineous milling, comprising a support member (8) having a relative linear displacement with respect to a fixed or movable rail (1), the said support member (8) comprising before the milling tool (5) in the direction of displacement, reference guiding means (6) for the cutting depth of the tool pass bearing against the upper face of the rolling surface (2) of the rail and reference guiding means (9) of the lateral cutting depth of the tool bearing against the lateral face (2b) of the rolling surfaces of the rail (2) characterized by the fact that the tool cutting depth guiding means of the tool are formed of a circular plate (6) mounted for free rotation on a vertical, or slightly inclined, shaft (7) fast with the support member (8) ; that the lateral cutting depth guiding means for the tool are formed of a conical roller (9) mounted for free rotation on the same shaft (7) as the said plate (6) ; and by the fact that the tool is constituted by a shaped milling cutter (5) working simultaneously on the upper said surface and on its lateral face.

2. Device according to claim 1, characterized by the fact that in front of the conical roller (9) and on the other lateral face of the rolling surface (2), movable bearing rollers (10, 10a) are provided, mounted for free rotation on vertical shafts fast with the support member (8).

3. Device according to one of claims 1 or 2, characterized by the fact that a fixed lateral bearing roller (14) and a movable lower resting roller (12) are located in the milling plane.

4. Device according to anyone of the claims 1 to 3, characterized by the fact that upper (16), lower (19) and lateral (17, 18) resting rollers are located behind the milling plane.

5. Device according to any of claims 1 to 4, characterized by the fact that two milling shafts (20, 20a) are mounted on the support member (8), said shafts revolving in reverse direction and carrying milling cutters associated to bearing roller to selectively machine a rail (1, 1a) worn on the left or right hand side and in front of the two machining shafts (20, 20a) are mounted two cutting depth reference plates (6, 6a) and two lateral cutting depth reference conical rollers (9, 9a) associated to movable resting rollers (10, 10a, 10b, 10c).

6. Device according to claim 1, characterized by the fact that the depth (6) and lateral (9) reference guiding means of the cutting depth of the tool and the milling means (5) are mounted on a machining head (23), said machining head sliding vertically on a member (24) slidebly mounted for horizontal movement on a fixed cross member (25) located on a driving member displacing itself with respect to the rail (1) fast with the track.

7. Device according to claim 5, characterized by the fact that the milling shaft (20) is fast with a sleeve (22) slidebly mounted for vertical movement on the machining head (23), said sleeve carrying a succing baffle (26) for the chips.

8. Device according to claim 5, characterized by the fact that two machining heads (23, 23a) each carrying a milling shaft (20) and upper (6) and lateral (9) guiding means are slidebly mounted for vertical movement on two members (24, 24a) displacable horizontally on a fixed cross member (25) fast with a driving member displacing itself with respect to the rails (1, 1a) fast with the track.

**Patentansprüche**

1. Vorrichtung zum Reprofilieren von Schienen durch kontinuierliches Fräsen, mit einem Tragorgan (8), das relativ zu einer feststehenden oder beweglichen Schiene (1) geradlinig bewegbar ist, wobei das Tragorgan (8) in der Bewegungsrichtung gesehen vor dem Fräswerkzeug (5) eine die Arbeitstiefenzustellung des Werkzeuges festlegende Bezugsführung (6) aufweist, die an der oberen Fläche des Schienenkopfes (2) angreift, und eine die seitliche Arbeitszustellung des Werkzeuges festlegende Bezugsführung (9), die an der Seitenfläche (2b) des Schienenkopfes (2) angreift, dadurch gekennzeichnet, daß die die Arbeitstiefenzustellung festlegende Bezugsführung aus einer kreisförmigen Scheibe (6) besteht, die auf einer vertikal oder leicht geneigt angeordneten und mit dem Tragorgan (8) verbundenen Achse (7) frei drehbar montiert ist ; daß die die seitliche Zustellung des Werkzeuges festlegende Führung aus einer konischen Rolle (9) gebildet ist, die auf der gleichen Achse (7) wie die Scheibe (6) frei drehbar angeordnet ist ; und daß das Werkzeug durch einen Formfräser (5) gebildet ist, der zugleich auf der oberen Fläche des Schienenkopfes und auf einer Seitenfläche desselben arbeitet.

2. Vorrichtung nach Anspruch 1, dadurch gekennzeichnet, daß der konischen Rolle (9) gegenüberliegend auf der anderen Seitenfläche des Schienenkopfes (2) bewegliche Stützrollen (10, 10a) auf Vertikalachsen frei drehbar montiert sind, welche mit dem Tragorgan (8) verbunden sind.

3. Vorrichtung nach Anspruch 1 oder 2, dadurch gekennzeichnet, daß in der Fräsebene eine ortsfeste seitliche Stützrolle (14) und eine bewegliche untere Stützrolle (12) angeordnet sind.

4. Vorrichtung nach einen der Ansprüche 1 bis 3, dadurch gekennzeichnet, daß hinter der Fräsebene obere Stützrollen (16), untere Stützrollen (19) und seitliche Stützrollen (17, 18) angeordnet sind.

5. Vorrichtung nach einem der Ansprüche 1 bis 4, dadurch gekennzeichnet, daß auf dem Tragorgan (8) zwei Frässpindeln (20, 20a) angeordnet sind, die gegensinnig drehen und den Stützrollen zugeordnete Fräser zur wahlweisen Bearbeitung einer rechts und links abgenützten Schiene (1, 1a) tragen, wobei vor den beiden Spindeln (20, 20a) zwei Bezugsscheiben (6, 6a) für die Arbeitstiefenzustellung und zwei konische Bezugsrollen (9, 9a) für die seitliche Arbeitszustellung montiert sind, welche den beweglichen Stützrollen (10, 10a, 10b, 10c) zugeordnet sind.

6. Vorrichtung nach Anspruch 1, dadurch gekennzeichnet, daß die Bezugsführung (6) für die Arbeitstiefenzustellung und die Bezugsführung (9) für die seitliche Arbeitszustellung des Werkzeuges und die Fräsmittel (5) auf einem Werkzeugkopf (23) montiert sind, der in vertikaler Richtung in einem Gehäuse (24) gleitet, das in horizontaler Richtung gleitbeweglich auf einem feststehenden Träger (25) montiert ist, der seinerseits auf einem Zugorgan angeordnet ist, das bezüglich der feststehenden Schiene (1) des Gleises bewegbar ist.

7. Vorrichtung nach Anspruch 5, dadurch gekennzeichnet, daß die Frässpindel (20) mit einer Hülse (22) verbunden ist, die auf dem Werkzeugkopf (23) in vertikaler Richtung gleitverschieblich montiert ist, wobei die Hülse ein Spanansauggehäuse (26) trägt.

8. Vorrichtung nach Anspruch 5, dadurch gekennzeichnet, daß zwei Werkzeugköpfe (23, 23a), die je eine Frässpindel (20) und obere Führungen (6) sowie seitliche Führungen (9) tragen, in vertikaler Richtung auf zwei Gehäusen (24, 24a) gleitverschieblich angeordnet sind, welche auf einem feststehenden Träger (25) in horizontaler Richtung bewegbar sind, der mit einem Zugorgan verbunden ist, das bezüglich der feststehenden Schienen (1, 1a) des Gleises bewegbar ist.

Fig. 1

Fig. 2

0 088 197

Fig. 3

Fig. 4

Fig. 5

Fig. 6

Fig. 7

Fig. 8

4

Fig. 9

Fig. 10

0 088 197

**Fig. 11**

**Fig. 12**

*Fig.13*

*Fig.14*

Fig.15

6   9   1

23

22

20

5

26

Fig.16

26

9   6

5

23

8